(19) Europäisches Patentamt European Patent Office Office européen des brevets

(11) **EP 3 560 836 B1**

(12) **EUROPEAN PATENT SPECIFICATION**

(45) Date of publication and mention of the grant of the patent:
**08.05.2024 Bulletin 2024/19**

(21) Application number: **17884611.9**

(22) Date of filing: **20.12.2017**

(51) International Patent Classification (IPC):
**B64D 25/00** (2006.01)    **B64C 27/08** (2023.01)
**B64C 39/02** (2023.01)    **B64D 45/04** (2006.01)

(52) Cooperative Patent Classification (CPC):
**B64D 45/04; B64U 10/14; B64U 20/30;**
**B64U 30/299; B64U 50/23;** B64D 2201/00;
Y02E 60/10

(86) International application number:
**PCT/JP2017/045841**

(87) International publication number:
**WO 2018/117199 (28.06.2018 Gazette 2018/26)**

(54) **AIRBAG DEVICE FOR AIRCRAFT**

AIRBAGVORRICHTUNG FÜR FLUGZEUG

DISPOSITIF DE COUSSIN DE SÉCURITÉ GONFLABLE DESTINÉ À UN AÉRONEF

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **20.12.2016 JP 2016247225**

(43) Date of publication of application:
**30.10.2019 Bulletin 2019/44**

(73) Proprietor: **Nipponkayaku Kabushikikaisha**
**Chiyoda-ku**
**Tokyo 100-0005 (JP)**

(72) Inventors:
• **NAKAMURA, Hiroshi**
  **Himeji-shi, Hyogo 679-2123 (JP)**
• **YAGIHASHI, Yasuhiko**
  **Himeji-shi, Hyogo 679-2123 (JP)**
• **SASAMOTO, Kouichi**
  **Himeji-shi, Hyogo 679-2123 (JP)**

(74) Representative: **IPAZ**
  **16, rue Gaillon**
  **75002 Paris (FR)**

(56) References cited:
EP-A2- 0 869 058        WO-A2-2008/054401
DE-A1- 19 654 315       JP-A- 2001 158 399
JP-A- 2006 027 291      JP-A- 2009 208 674
JP-A- 2016 518 286      US-A1- 2016 144 958
US-A1- 2016 272 333     US-A1- 2016 332 739
US-A1- 2016 332 739     US-B1- 8 979 023

EP 3 560 836 B1

## Description

TECHNICAL FIELD

The present invention relates to an airbag device mounted on a flying object.

BACKGROUND ART

In recent years, with the development of flight control technology, an industrial use of flying objects equipped with a plurality of rotor blades, for example, called drone, is accelerating. Such flying objects are expected to expand worldwide in the future.

On the other hand, the risk of fall accidents of flying objects as described above is considered to be dangerous and hinders spread of the flying objects. A background where the risk of such a fall accident is considered to be dangerous is considered to be related to the possibility that a lithium ion battery mounted on a flying object may be ignited by falling impact. Importance of battery protection is becoming an international consensus. It is important to protect other devices (such as various sensors, safety devices, and flight control devices) mounted on flying objects.

Thus, in order to reduce falling impact on a flying object, it has been proposed that the flying object is provided with an airbag. For example, Patent Literature 1 describes that an airbag is provided at a lower portion of a multicopter (helicopter) as a flying object.

CITATIONS LIST

PATENT LITERATURE

Patent Literature 1: Japanese Published Unexamined Patent Application-A No. 2016-088111.

US-20160332739-A1 discloses an unmanned aerial vehicle comprising airbags and inflation device coupled to the airbags in order to inflate them based upon receipt of an activation signal. The airbag is deployed by an inflation device consisting in compressed gas contained in canisters for example. The airbag has vents that release air from the airbags upon impact. The release of air helps further reduce forces resulting from impact.

SUMMARY OF INVENTION

TECHNICAL PROBLEMS

However, since the airbag provided in the multicopter described in Patent Literature 1 is large enough to reach a region over the entire lower portion of the multicopter when the airbag inflates, the total weight of the airbag is heavy. As a result, the flight performance is significantly reduced. In the technology of Patent Literature 1, it is difficult to individually protect each device mounted on a flying object.

Thus, an object of the present invention is to provide an airbag device for a flying object, which sufficiently has a performance of protecting each device mounted on the flying object.

SOLUTIONS TO PROBLEMS

The present invention is defined by claim 1. Preferred aspects of the invention are defined by the dependent claims.

BRIEF DESCRIPTION OF DRAWINGS

FIG. 1 is a plan view showing an airbag device for a flying object according to the present embodiment.

FIG. 2 is a plan view of a flying object equipped with the airbag device in FIG. 1, from which an upper cover member has been removed.

FIG. 3(a) is a cross-sectional view taken along a line A-A of FIG. 2 and including the upper cover member, and FIG. 3(b) is a view showing an expanded state of an expandable member of FIG. 3(a).

FIG. 4 is a plan view showing an airbag device for a flying object according to a modification of the present invention.

FIG. 5(a) is a cross-sectional view according to a modification of FIG. 3(a), and FIG. 5(b) is a view showing an expanded state of an expandable member of FIG. 5(a).

FIG. 6 is a view showing a flying object equipped with an airbag device for a flying object according to another modification of the present embodiment.

FIG. 7 is a block diagram showing a functional configuration of a device mounted on the flying object of FIG. 6.

FIG. 8 is a view showing a flying object equipped with an airbag device for a flying object according to still another modification of the present embodiment.

FIG. 9 is a graph showing results of a tank combustion test of a gas generator used in Examples 1 and 2.

FIG. 10 is a view showing specifications of an airbag device used in Examples 1 and 2.

FIG. 11 is a table showing details of the airbag device used in Example 1. Vent0 shows an airbag device having no vent hole, Vent1 shows an airbag device having one vent hole, and Vent2 shows an airbag device having two vent holes.

FIG. 12 is a graph showing a change over time in an internal pressure (pressure) of the airbag measured in Example 1. vent0 (one-dot chain line) shows an airbag device having no vent hole, vent1 (dotted line) shows an airbag device having one vent hole, and vent2 (practice) shows an airbag device having two vent holes.

FIG. 13 is a view showing an embodiment of Example 2.

FIG. 14 is a table showing results of a resultant acceleration measurement test of Example 2.

FIG. 15 is a graph showing results of linear approximation obtained by plotting the results of the resultant acceleration measurement test of Example 2 with respect to the internal pressure of the airbag and maximum resultant acceleration. Points indicate the maximum resultant acceleration measured.

FIG. 16 is a table showing the maximum resultant acceleration in Example 2.

FIG. 17 is a graph showing results of linear approximation obtained by plotting a vent hole area percentage and the maximum resultant acceleration of the airbag device used in Example 2.

FIG. 18 is a graph in which weight of an obstacle and a relative speed of an obstacle at which impact can be absorbed by the airbag in the present invention are plotted.

DESCRIPTION OF EMBODIMENT

Hereinafter, an airbag device for a flying object according to an embodiment of the present invention will be described with reference to the drawings.

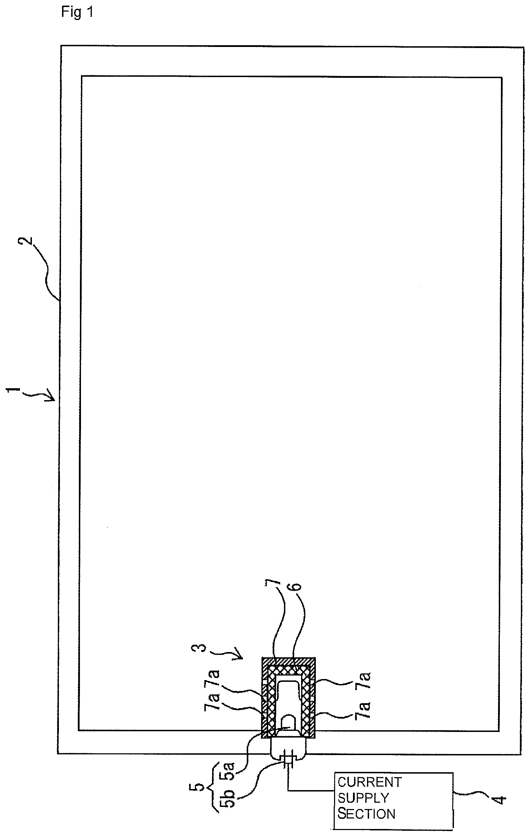

As shown in FIG. 1, an airbag device for a flying object (hereinafter, may be simply referred to as an airbag device) 1 according to the present embodiment includes an expandable member 2, a gas generator 3, and a current supply section 4. The expandable member 2 is, for example, an airbag made of cloth, polyester, or polyamide, and is configured to expand when gas flows into the inside thereof. A silicon coating may be applied to the surface of the airbag. This airbag may include one or more vent holes capable of exhausting gas inside the airbag until the inside of the airbag reaches a predetermined internal pressure or less when the inside of the airbag reaches the predetermined internal pressure or more. In FIG. 1, the expandable member 2 is formed in a rectangular shape in plan view, but is not limited to this shape. For example, the expandable member 2 may be formed in another shape such as a square shape or an elliptical shape.

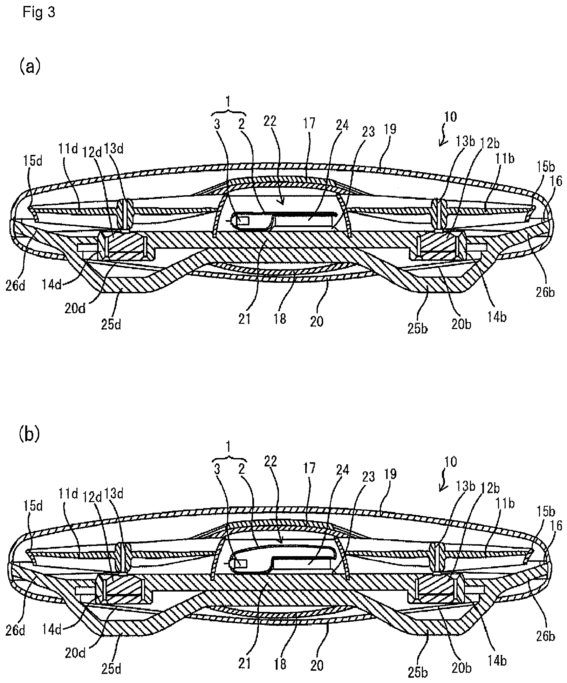

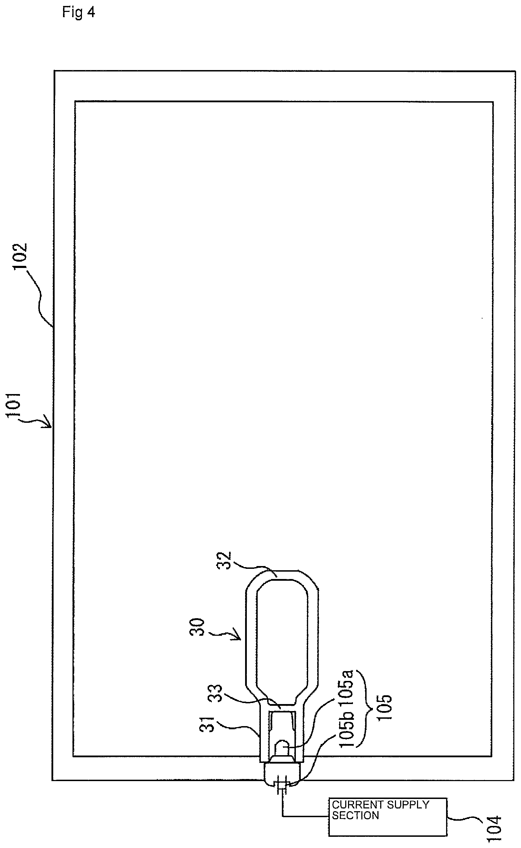

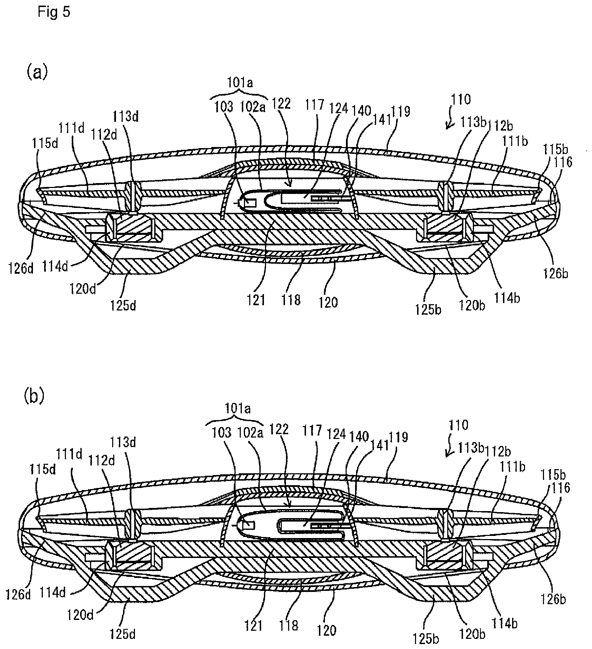

The gas generator 3 is connected to the expandable member 2. In detail, the gas generator 3 is inserted inside the expandable member 2 from a left portion of the expandable member 2 except for a portion of the gas generator 3 (refer to the belowmentioned FIGS. 3(a) and 3(b)). For this reason, although the portion of the gas generator 3 inserted inside the expandable member 2 is invisible in appearance, FIG. 1 conveniently illustrates the overall structure of the gas generator 3 in order to facilitate the understanding of the structure of the gas generator 3. The same applies to FIG. 4 and FIGS. 5(a) and 5(b) described later.

The gas generator 3 includes a squib 5, a bottomed cylindrical filter 6 having an open end, and a bottomed cylindrical gas discharge member 7 having an open end and covering an outer shape portion of the filter 6. The squib 5 has an ignition part 5a and a pair of terminal pins 5b. The ignition part 5a includes a resistor (bridge wire) (not shown) connected to the pair of terminal pins 5b, and an ignition charge is filled in the ignition part 5a so as to surround the resistor or be in contact with the resistor. A transfer charge may be charged into the ignition part 5a as necessary. A nichrome wire or the like is generally used as the resistor, and ZPP (zirconium/potassium perchlorate), ZWPP (zirconium tungsten potassium perchlorate), lead tricinate and the like are generally used as an ignition charge. The type and amount of the ignition charge can be adjusted appropriately.

The filter 6 prevents or suppresses that slag and the like are discharged out of the filter 6 during combustion of the ignition charge, and has a function of cooling gas. The filter 6 is disposed in the expandable member 2 in a state where the open end of the filter 6 is connected to an inner portion the expandable member 2. The squib 5 is disposed to close the open end of the filter 6. Although the filter 6 is provided from the viewpoint of slag collection and gas cooling as described above, from the viewpoint of reducing the weight of the airbag device 1 for a flying object and a flying object 10 described later equipped with the airbag device 1, the filter 6 is not an essential component. That is, in the present embodiment, the filter 6 may or may not be provided.

The gas discharge member 7 is disposed in the expandable member 2 in a state where the open end of the gas discharge member 7 is connected to the expandable member 2. The gas discharge member 7 has a plurality of gas outlets 7a formed on the upper side in FIG. 1, and a plurality of gas outlets 7a formed on the lower side in FIG. 1. The gas discharge member 7 is made of, for example, metal or plastic.

In such a configuration, in a state where the airbag device 1 for a flying object is mounted on the flying object, when the flying object is in a preset state such as (1) when the flying object collides, (2) when an acceleration sensor (not shown) detects acceleration not less than a value determined that the flying object is falling, or (3) when an operation signal from a wireless operation device (not shown) is not received for a certain period of time, the current supply section 4 having received a signal from a control device (not shown) (such as a computer that includes a CPU, a ROM, a RAM, and the like and operates according to a predetermined program) supplies a predetermined amount of current to the terminal pin 5b. As a result, current is supplied to the resistor in the ignition part 5a, and Joule heat is generated in the resistor, so that the ignition charge starts to burn in response to this heat. As the ignition charge burns, combustion of the pyro-type gas generating agent starts, and gas is generated in the filter 6. This gas flows into the expandable member 2 from the gas outlet 7a of the gas discharge member 7 through the filter 6. Consequently, the expandable member 2 is expanded.

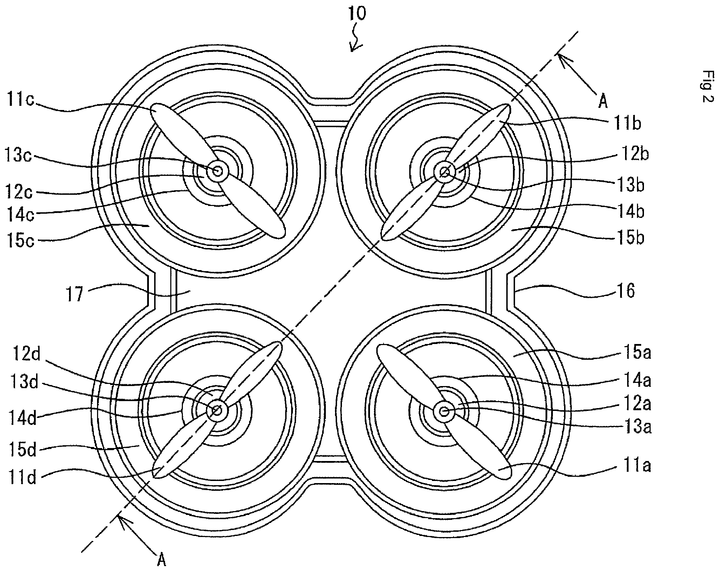

Next, the configuration of the flying object equipped with the airbag device 1 for a flying object will be described. FIG. 2 is a plan view of the flying object 10. In FIG. 2, in order to make an internal configuration of the flying object 10 easy to understand, for example, the flying object 10 is shown in a state where an upper cover member 19 (see FIGS. 3(a) and 3(b)), to be described later, which is formed of a mesh material or the like, is removed.

The flying object 10 is a flight device that performs flight based on user's remote control operation or a preset flight route. As shown in FIG. 2, the flying object 10 includes a frame 16, the upper cover member 19 (see FIGS. 3(a) and 3(b)), and a lower cover member 20 (see FIGS. 3(a) and 3(b)) formed of, for example, a mesh material or the like. The frame 16 supports the upper cover member 19 and the lower cover member 20. As shown in FIGS. 3(a) and 3(b), the upper cover member 19 covers respective components located above the frame 16. The upper cover member 19 has an upward convex rounded shape. The lower cover member 20 covers respective components located below the frame 16 except for some of the components. The lower cover member 20 has a downward convex rounded shape.

Returning to FIG. 2, the flying object 10 includes, for example, four propellers 11a, 11b, 11c, and 11d, and motors 12a, 12b, 12c, and 12d that rotationally drive the propellers 11a, 11b, 11c, and 11d correspondingly. The propellers 11a, 11b, 11c, and 11d are connected to rotary shafts 13a, 13b, 13c, and 13d of the corresponding motors 12a, 12b, 12c, and 12d. Thus, when the rotary shafts 13a, 13b, 13c and 13d are rotated by the motors 12a, 12b, 12c and 12d, the propellers 11a, 11b, 11c and 11d rotate along with the rotation. The propellers 11a, 11b, 11c and 11d are arranged at the four corners of the frame 16.

The rotational speeds of all the propellers 11a, 11b, 11c, and 1 1d are made the same, and while the propellers 11a and 11c are rotated in one direction, the propellers 11b and 11d are rotated in the opposite direction with respect to the one direction, whereby the flying object 10 can be raised or lowered. In a state where the flying object 10 is flying, if the rotational speed of the propellers 11a and 11b is slower than the rotational speed of the propellers 11c and 11d, the flying object 10 moves in the direction of the propellers 11a and 11b. Conversely, in the state where the flying object 10 is flying, if the rotational speed of the propellers 11c and 11d is slower than the rotational speed of the propellers 11a and 11b, the flying object 10 moves in the direction of the propellers 11c and 11d. In the state where the flying object 10 is flying, if the rotational speed of the propellers 11a and 11c is slower than the rotational speed of the propellers 11b and 11d, the flying object 10 horizontally rotates clockwise or counterclockwise. Thus, the flying object 10 can realize each operation of floating, horizontal movement, rotational movement, stopping, and landing by changing the rotational speed and rotational direction of the propellers 11a, 11b, 11c, and 11d. The number of propellers is a mere example and is not limited to four.

Subsequently, the flying object 10 includes rotor guards 15a, 15b, 15c, and 15d that correspondingly protect the propellers 11a, 11b, 11c, and 11d, and an upper center guard 17 and a lower center guard 18 connected to each other (see FIGS. 3(a) and 3(b)). The rotor guards 15a, 15b, 15c, and 15d, the upper center guard 17, and the lower center guard 18 are formed of, for example, resin or the like. The rotor guards 15a, 15b, 15c, and 15d are annular members provided so as to surround rotation regions of the corresponding propellers 11a, 11b, 11c, and 11d. The rotor guards 15a, 15b, 15c, and 15d thus configured can protect the propellers 11a, 11b, 11c, and 11d from horizontal impacts on the flying object 10.

As shown in FIGS. 3(a) and 3(b), an internal space 22 is formed by the upper center guard 17 and a central frame 21 described later. In the internal space 22, a battery 24 supported by a base 23 and the above-described airbag device 1 which protects the battery 24 are disposed. Thus, the battery 24 is protected by the upper center guard 17 and the central frame 21 at the time of impact, and also by the inflated expandable member 2 of the airbag device 1. For example, a lithium ion battery can be employed as the battery 24.

Subsequently, the flying object 10 is provided with various components for retaining the structure of the flying object 10. More specifically, as shown in FIGS. 3(a) and 3(b), the flying object 10 has legs 25b and 25d located below the propellers 11b and 11d, frame connecting members 26b and 26d, the central frame 21, and motor holding portions 14b and 14d. Although not shown, legs, frame connecting members, motor holding portions, and openings described later are provided corresponding to the propellers 11a and 11c.

The legs 25b and 25d are grounded when the flying object 10 lands. Here, in the lower cover member 20, openings 20b and 20d are formed in portions corresponding to the legs 25b and 25d. The leg 25b protrudes outward through the opening 20b, and the leg 25d protrudes outward through the opening 20d. The opening 20b is formed below the propeller 11b, and the opening 20d is formed below the propeller 11d, whereby air permeability below the propellers 11b and 11d is improved, so that the flight performance can be improved.

The frame connecting member 26b is connected to the frame 16, the leg 25b, and the central frame 21, and the frame connecting member 26d is connected to the frame 16, the leg 25d, and the central frame 21. The frame connecting members 26b and 26d are members having elasticity, and are formed of, for example, plastic. Thus, by making the frame connecting members 26b and 26d elastic, it is possible to absorb the impact from the frame 16 and the four legs including the legs 25b and 25d.

The central frame 21 is provided substantially at the center in the height direction inside the flying object 10. The central frame 21 is formed of, for example, a member that is strong and is less likely to be thermally deformed like metals, carbon, or the like. The base 23 described above and a portion of the expandable member 2 of the airbag device 1 are disposed on the central frame 21. The motor holding portions 14b and 14d hold the motors 12b and 12d. The motor holding portions 14b and 14d are supported by the central frame 21.

Here, as shown in FIG. 3(a), in an initial state, that is, in a state where no collision has occurred, a portion of the expandable member 2 is disposed in contact with an upper portion of the battery 24. In this case, it is desirable that a portion of the expandable member 2 be disposed in contact with the entire upper portion of the battery 24 from the viewpoint of reliability of the protection of the battery 24.

Based on the state of FIG. 3(a), when it is determined by a control device (not shown) that the flying object 10 is in a preset state such as when the flying object 10 collides due to falling or the like, as shown in FIG. 3(b), gas flows into the expandable member 2 to expand the expandable member 2. Thus, when the expandable member 2 is in an expanded state, a portion of the expandable member 2 is in contact with the entire upper portion of the battery 24. Thereby, at the time of collision, the impact on the battery 24 can be sufficiently absorbed.

As described above, according to the airbag device 1 according to the present embodiment, the expandable member 2 is provided inside an airframe (housing (the upper cover member 19 and the lower cover member 20)) of the flying object 10 provided with the battery 24 and is expandable inside the airframe, whereby the weight can be significantly reduced as compared with conventional airbags that is provided at a lower portion of a flying object in an initial state and reaches a region over the entire lower portion of the flying object when inflated. This does not degrade the flight performance of the flying object 10. Since the expandable member 2 expands inside the airframe of the flying object 10 provided with the battery 24, performance of protecting the battery 24 is satisfactorily secured. According to the above, it is possible to provide the airbag device 1 for a flying object which is reduced in weight while sufficiently having a performance of protecting the battery 24.

In the present embodiment, a mode (pyro type) in which gas generated by combustion of the ignition charge is made to flow into the expandable member 2 is employed, whereby as compared with a mode (cylinder type) in which compressed gas filled in a container is made to flow into an expandable member, the container for filling the compressed gas is not required, so that the weight of the airbag device 1 can be further reduced.

In the present embodiment, a portion of the expandable member 2 is disposed in contact with the upper portion of the battery 24 in the initial state, whereby the upper portion of the battery 24 can be satisfactorily protected when the expandable member 2 is expanded.

Thus, the embodiment of the present invention has been described hereinabove with reference to the drawings. However, the specific structure of the present invention shall not be interpreted as to be limited to the above described embodiment. The scope of the present invention is defined not by the above embodiment but by claims set forth below, and shall encompass every modification within the scope of the claims. The following modifications can be applied.

In the above embodiment, the mode (pyro type) in which gas generated by combustion of a powder is made to flow into the expandable member 2 is employed, but the invention is not limited thereto, and, as described below, the cylinder type in which compressed gas filled in a gas-filled container is made to flow into an expandable member 102 may be employed. Here, in the following description, components with the same last two digits as those in the above-described embodiment are the same as those described in the above-described embodiment unless otherwise specified, and therefore the description thereof may be omitted.

As shown in FIG. 4, a gas generator 30 according to the modification includes a squib 105, a connection chamber 31 disposed in the expandable member 102 in a state where an open end of the connection chamber 31 is connected to an inner portion of the expandable member 102, a gas-filled container 32 filled with compressed gas and disposed inside the expandable member 102, and a vulnerable wall 33 partitioning the connection chamber 31 and the gas-filled container 32. A portion of the gas-filled container 32 is a vulnerable portion. The open end of the connection chamber 31 is closed by the squib 105.

In the configuration as described above, in a state where an airbag device 101 for a flying object is mounted instead of the airbag device 1 for the flying object 10 of the above embodiment, at the time of collision, a current supply section 104 having received a signal from a control device (not shown) supplies a predetermined amount of current to a terminal pin 105b. As in the above embodiment, current is supplied to the resistor in an ignition part 105a, and Joule heat is generated in the resistor, so that the ignition charge starts to burn in response to this heat.

Then, the ignition charge burns to generate gas in the connection chamber 31. The pressure of the gas causes the vulnerable wall 33 to be cleaved, and as a result, the pressure in the gas-filled container 32 increases, so that the vulnerable portion of the gas-filled container 32 is cleaved. As a result, the compressed gas in the gas-filled container 32 flows into the expandable member 102, and the expandable member 102 is expanded. According to such an embodiment, the gas generating agent burned by flame due to the squib 105 is not required.

In the above embodiment, a portion of the expandable member 2 is disposed in contact with the upper portion of the battery 24 in the initial state, but the invention is not limited thereto, and as long as the battery 24 can be protected after operation, a portion of the expandable member 2 may be disposed separately above the battery 24 without being in direct contact with the upper portion of the battery 24 in the initial state. A portion of the expandable member 2 may be disposed in contact with a side portion of the battery 24 in the initial state, or may be disposed to the side of the battery 24.

Furthermore, in the above embodiment, a portion of the expandable member 2 is disposed in contact with the upper portion of the battery 24 in the initial state, but the invention is not limited thereto, and as shown in FIG. 5(a), an expandable member 102a may be disposed so as to surround the upper portion of a battery 124, at least one side portion and a lower portion of the battery 124 in the initial state. In this case, the battery 124 is supported by a horizontally extending plate member 140 which is fixed to a wall portion 141 provided in an internal space 122 at one side thereof. According to such a configuration, as shown in FIG. 5(b), when the expandable member 102a is expanded, the expandable member 102a can protect the upper portion, at least one side portion and the lower portion of the battery 124.

In the above embodiment and modification, although protection of the battery provided inside the airframe of the flying object has been explained, the present invention can be applied not only to the battery but any device provided inside the airframe.

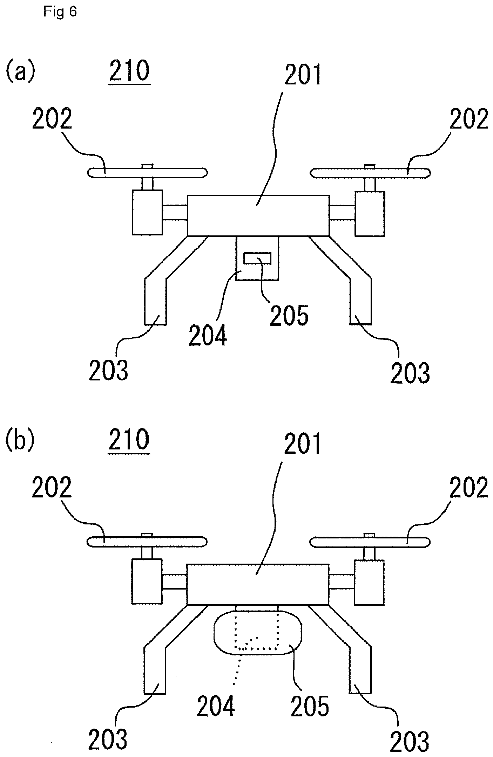

Further, as another modification, there are an airbag device for a flying object according to a modification shown in FIG. 6 and a flying object provided with the airbag device. This will be described in detail below.

A flying object 200 includes an airframe 201, one or more propulsion mechanisms (such as a propeller) 202 that are connected to the airframe 201 and propel the airframe 201, a plurality of legs 203 provided at a lower portion of the airframe 201, a device 204 provided at a lower center of the airframe 201, and an airbag device 205 provided on a side surface of the device 204. Although the airbag device 205 has substantially the same configuration as any of the airbag devices in the above embodiment or the modification, the airbag device 205 is different in that as shown in FIG. 6(a), the shape is contracted or folded before inflation of an airbag (initial state) and, as shown in FIG. 6(b), the shape is tubular after inflation of the airbag. A plurality of the airbag devices 205 may be provided so as to cover all the side surfaces of the device 204, or the airbag device 205 may be provided in a ring shape so as to cover all the side surfaces of the device 204 with one airbag. Although the airbag has a tubular shape in this modification, the present invention is not limited thereto, and one or more spherical or oblate spherical airbags may be provided on the side surface of the device 204 and/or a bottom surface of the device 204.

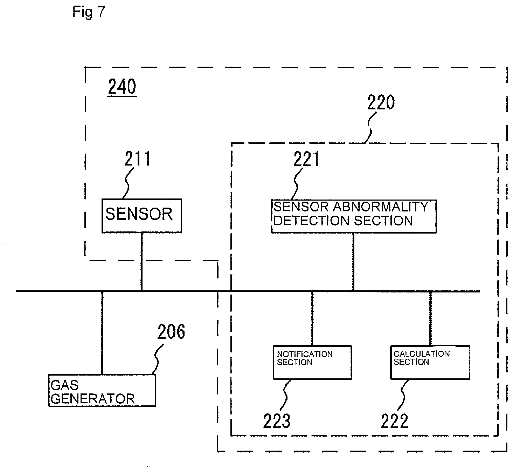

The device 204 is, for example, a power source of the flying object 200, a safety device used to protect the flying object 200 and a collision object that collides with the flying object 200 from the impact at the time of collision, a laser surveying device capable of performing surveying, an altitude sensor capable of detecting altitude, an infrared sensor or ultrasonic sensor capable of detecting a distance from the collision object, a camera capable of performing imaging, a controller 220 (see FIG. 7), a black box device (data recording device) that records acquired data, or a flight control device (such as a flight controller) that controls flight of the flying object 200, but the device 204 is not limited thereto. Here, examples of the safety device include a parachute, a paraglider, and an ejection device that ejects a parachute or paraglider. The controller 220 is also a part that constitutes a portion of an abnormality detection device (detection device) 240.

As shown in FIG. 7, the abnormality detection device 240 includes a sensor (detection part) 211 and a controller (computer having a CPU, a ROM, a RAM, and the like) 220 and is electrically connected to an igniter (not shown in FIG. 6) in a gas generator 206 of the airbag device 205.

The sensor 211 detects a flight state of the flying object 200 (including collision, collision prediction, crash, and the like). Specifically, the sensor 211 is a sensor including one or more selected from, for example, an acceleration sensor, a gyro sensor, an air pressure sensor, a laser sensor, an ultrasonic sensor, etc. and can acquire data of the flying state of the flying object 200, such as the speed, acceleration, inclination, altitude, and position of the flying object 200.

The controller 220 includes a sensor abnormality detection section 221, a calculation section 222, and a notification section 223 as a functional configuration. The controller 220 executes a predetermined program to functionally realize the sensor abnormality detection section 221, the calculation section 222, and the notification section 223.

The sensor abnormality detection section 221 detects an abnormal state of the sensor 211. That is, the sensor abnormality detection section 221 detects whether the sensor 211 can operate normally.

The calculation section 222 determines whether the flying state of the flying object is abnormal, specifically, whether the flying object 200 has received an impact (or whether the flying object 200 has collided), based on each piece of data acquired by actual measurement by the sensor 211. Alternatively, the calculation section 222 predicts that the flying object 200 collides with an external obstacle (collision prediction). In the collision prediction, a distance between the flying object 200 and an obstacle is measured by an infrared sensor, an ultrasonic sensor, or the like, and a relative speed between the flying object 200 and the obstacle is measured by an acceleration sensor, a camera, or the like. Alternatively, the calculation section 222 calculates the relative speed with respect to the obstacle from a time change of the measured distance and calculates time until collision from the relative speed of the obstacle and the distance from the obstacle at that time. When the calculation result is equal to or more than a predetermined threshold value, a collision is predicted, and it is determined that the flight state is abnormal. When the calculation section 222 determines that the flight state of the flying object is abnormal or predicts that the flying object 200 collides with an external obstacle, the calculation section 222 outputs an abnormality signal (that may include an instruction signal to activate or operate other equipment) to the outside; however, an abnormality signal output section may be provided separately from the calculation section 222 and output the abnormality signal according to an instruction of the calculation section 222.

When the sensor abnormality detection section 221 detects an abnormality in the sensor 211, the notification section 223 notifies an administrator or the like that the abnormality has been detected.

Subsequently, the operation of the abnormality detection device 240 of the present embodiment will be described.

First, the sensor abnormality detection section 221 performs an abnormality inspection of the sensor 211. Specifically, whether an acceleration sensor or the like that measures the acceleration of the flying object normally operates is inspected by the sensor abnormality detection section 221.

When it is not determined that there is no abnormality as a result of the above inspection, the sensor abnormality detection section 221 notifies the administrator or the like of an error and ends the inspection. On the other hand, when it is determined that there is no abnormality as a result of the inspection, the calculation section 222 reads each piece of data actually measured by the sensor 211.

When the data measured and acquired by the sensor 211 is not abnormal (including a case where the collision prediction is determined), the calculation section 222 outputs a signal to be returned to the processing of the abnormality inspection of the sensor 211 by the sensor abnormality detection section 221.

On the other hand, when the acquired data is abnormal (including the case where the collision prediction is determined), the calculation section 222 outputs the abnormal signal to the gas generator 206. When the collision prediction is determined, the abnormality signal is immediately output to the gas generator 206 if a prediction time until collision is shorter than time required to deploy the airbag, and if the prediction time until the collision is longer than the time required to deploy the airbag, a sum of time to reach an optimal internal pressure value of the airbag and the time required to deploy the airbag is compared with the calculated time until the collision. If the calculated time is shorter, the abnormality signal is output to the gas generator 206, and if the calculated time is longer, the process of measuring the distance from the obstacle again and calculating the time until the collision again is repeated. By following this process, malfunction or erroneous detection is prevented to ensure reliability of the operation.

Then, the gas generator 206 having received a deployment device activation signal is activated, deploys the airbag of the airbag device 205 such that the airbag has a shape as shown in FIG. 6(b), and ends the process.

According to the present modification configured as above, since each important device mounted on the flying object 200 can be protected from the impact at the time of collision, even after the collision, control of the flying object 200 and operation of each device cannot be disturbed. In particular, a device provided outside the flying object 200 can be effectively protected from the impact at the time of collision.

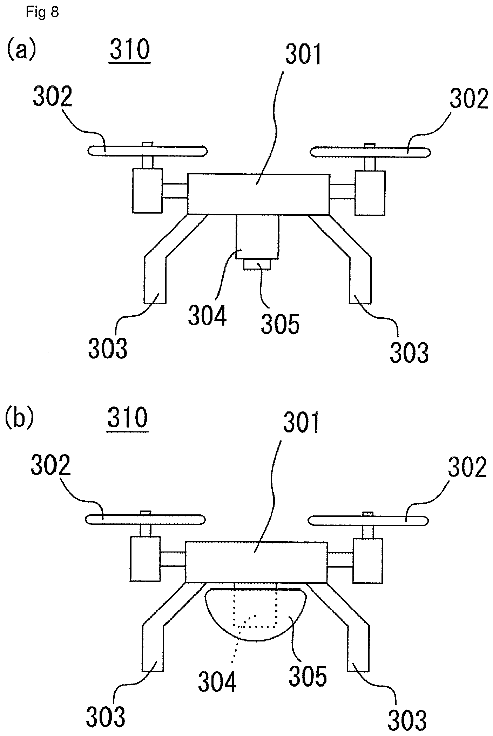

Further, as another modification, there are an airbag device 305 for a flying object according to a modification shown in FIG. 8 and a flying object 300 provided with the airbag device 305. This will be described in detail below. In the present modification, components with the same last two digits as those in the modification shown in FIG. 6 are the same as those described in the modification shown in FIG. 6, and therefore the description thereof may be omitted.

The present modification is different from the modification shown in FIG. 6 only in that the airbag device 305 is provided at a lower portion of the device 304 (see FIG. 8(a)) and the deployed airbag has a dome shape to cover a periphery (side surface and lower surface) of the device 304 (see FIG. 8(b)), and the other points are substantially the same including the action and the effect.

A detectable distance can be accurately detected at 0 m to 10 m of the collision by using an acceleration sensor, an ultrasonic sensor, or the like alone or by combining them. If the detectable distance exceeds approximately 10 m, it becomes difficult to judge whether or not the object collides, which will lead to an erroneous determination. In addition, an erroneous determination is led by scattering of ultrasonic waves or the like emitted from the sensor.

In the present invention, a tank combustion test is a test conducted by the method described below. A gas generator for an airbag is fixed at room temperature in a 60-liter SUS (stainless steel) tank, and a cable sealed from the outside of the tank to the inside of the tank is connected to an igniter of the gas generator to seal the tank. Further, the sealing cable is connected to an outside ignition current generating device. The ignition current generating device is switched on, and the switching-on operation is used as a trigger to start data collection by a pressure sensor installed on an inner wall of the tank. The time when the ignition current generating device is switched on is set to 0, and a pressure increase change in the tank is measured by a data logger for time from 0 ms to 210 ms. A sampling rate is 10 kHz. Data sampled by the data logger is digitally signal processed to obtain a curve that finally serves as a tank pressure-time (kPa/milliseconds) curve and evaluates performance of the gas generator.

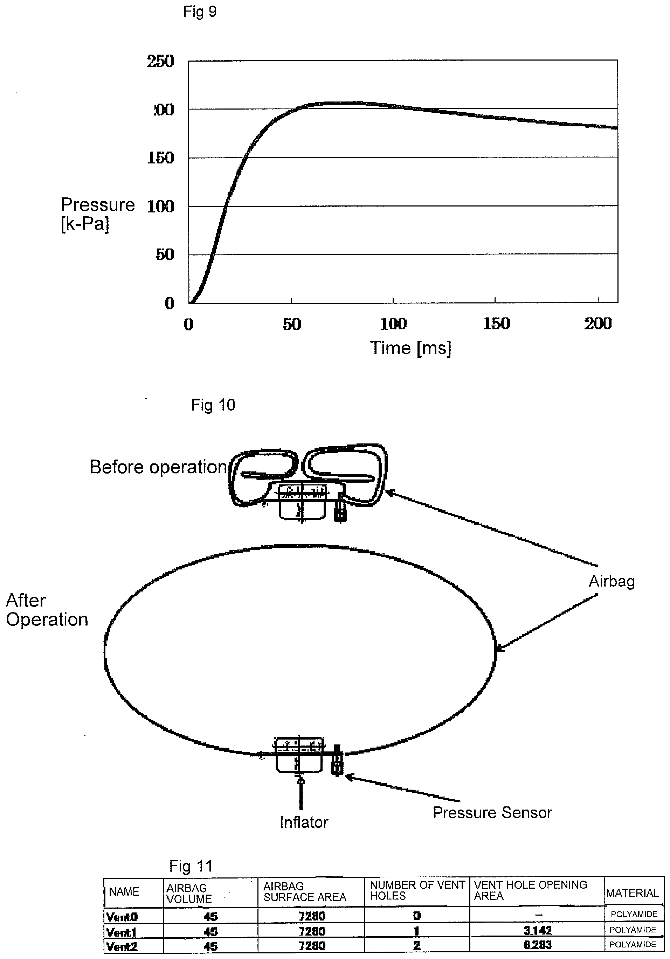

The tank combustion test was conducted on the gas generators used in Examples 1 and 2. The results are shown in FIG. 9.

Specifications of the airbag used in Examples 1 and 2 are shown in FIG. 10.

(Example 1)

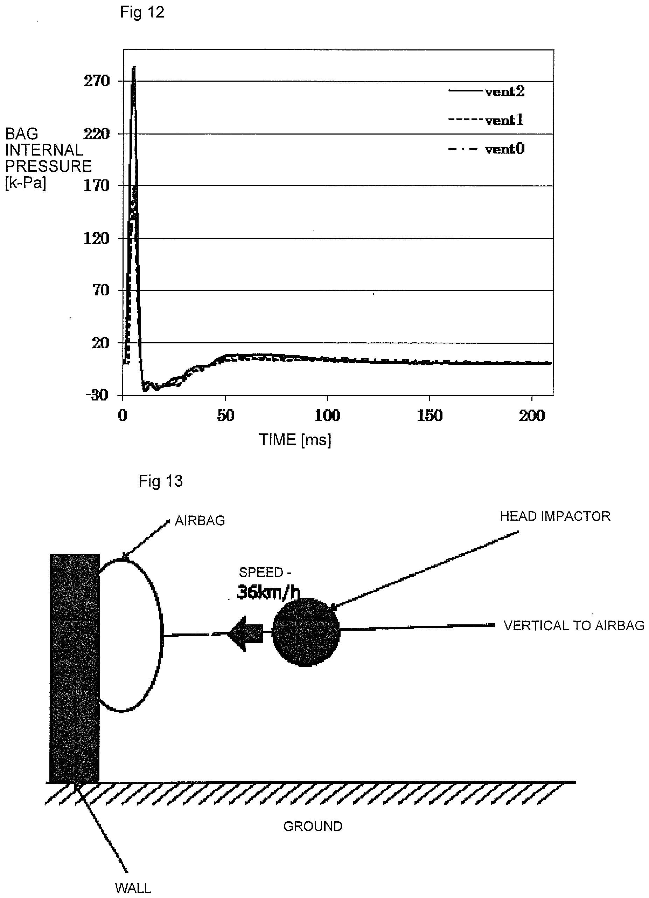

A device (airbag device) in which a gas generator was assembled to the above-described airbag folded into a small size was used, a pressure sensor (PGM-10KC (Kyowa Electronic Instruments Co., Ltd.)) was attached to the airbag device in an initial state, and the airbag device was operated. The result of measuring a change over time in an internal pressure (pressure) of the airbag is shown in FIG. 11. As the airbag device, one having two vent holes, one having one vent hole, and one having no vent holes were used. The results are shown in FIG. 12.

In FIG. 12, a maximum value and a minimum value appear in the range of 0 ms to 10 ms. The maximum value is due to an operating pressure of the gas generator, since a gap between the gas generator and the bag was very small in the state where the bag was folded into a small size. Subsequently, a volume change occurred as the airbag inflated, and the pressure dropped rapidly to reach the minimum value. Since the airbag itself was not deployed during this time, the function of the airbag was not exercised, so that an accurate internal pressure value of the airbag was not indicated.

(Example 2)

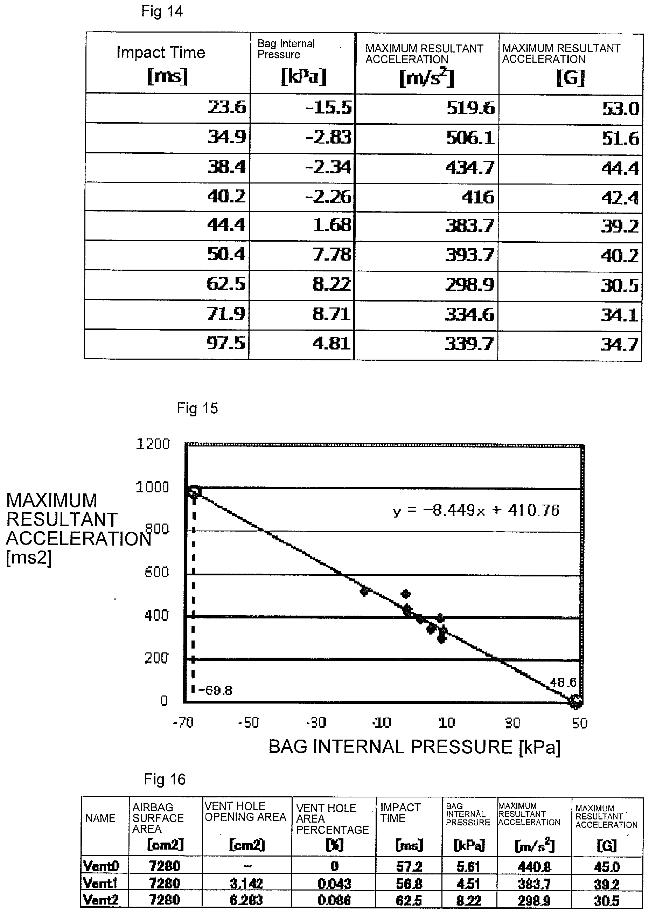

Using the same airbag device having two vent holes as used in Example 1, a resultant acceleration calculation test was conducted by an impactor test in which using the facilities of Japan Automobile Research Institute, a head impactor (comparable product with domestic technical standard and ECE No. 127) was vertically collided with the airbag at 36 km/h. The outline of this test is shown in FIG. 13. Since the same airbag device as that of Example 1 was used, the internal pressure of the airbag at a predetermined time was the same as in Example 1, and the impactor was made to collide for nine predetermined times (nine predetermined internal pressures) to measure resultant acceleration. A peak top value of the measured resultant acceleration is taken as maximum resultant acceleration, and the result is shown in FIG. 14.

FIG. 15 shows results of linear approximation obtained by plotting the result of FIG. 14 with respect to the internal pressure of the airbag and the maximum resultant acceleration. According to a continuous impact test JIS C 60068-2-27, an indication of the maximum resultant acceleration at which the device is protected is set to peak acceleration 1000 m/s$^2$ or less, and from the above approximate straight line, it is considered that an airbag internal pressure suitable for protection (= the airbag internal pressure after an internal pressure of the airbag exhibits a minimum value) is -69.8 kPa to 48.6 kPa.

(Example 3)

A resultant acceleration measurement test according to an impactor test was conducted in the same manner as in (Example 2) using each of the airbag devices of (Example 1). The resultant acceleration was measured at each time (60 ms) at when the maximum resultant acceleration decreased in (Example 2). A peak top value of the measured resultant acceleration is taken as the maximum resultant acceleration, and the result is shown in FIG. 16. In the airbag having no vent hole, a vent hole area percentage was set to 0.

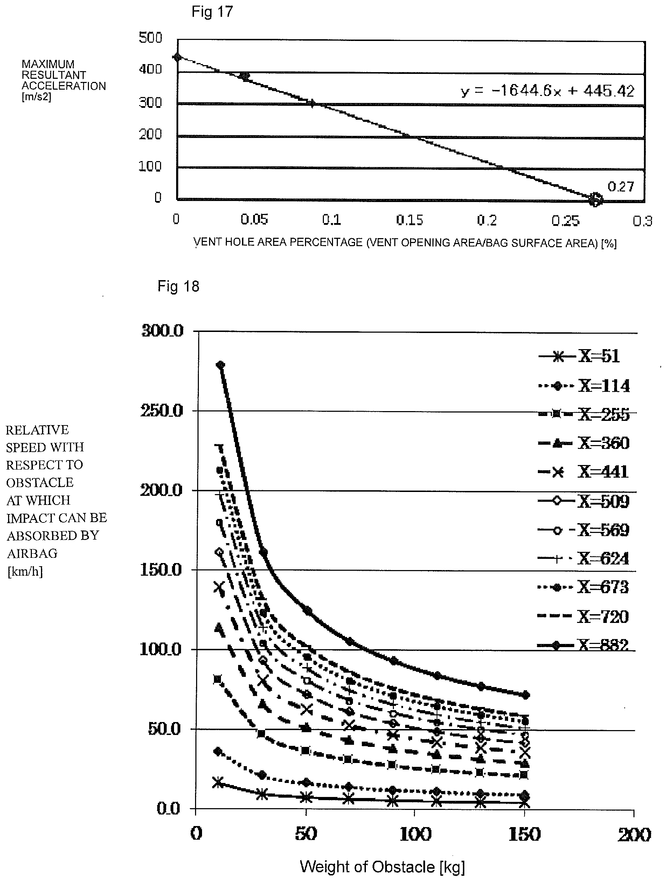

FIG. 17 shows results of linear approximation obtained by plotting the result of FIG. 16 with respect to the vent hole area percentage and the maximum resultant acceleration. From the above approximate straight line, it can be seen that the higher the vent hole area percentage, the lower the maximum resultant acceleration, and the vent hole area percentage at which the maximum resultant acceleration becomes 0 is 0.27%. Thus, the area percentage of the vent hole suitable for protection is considered to be 0% to 0.27%.

(Example 4)

Using the airbag device of the present invention, an estimate was made that an obstacle having a weight of M [kg] was made to collide. The trial calculation was performed according to the procedure shown below.

(1) Calculation of theoretical energy absorption value of airbag
A theoretical energy absorption value P $\times$ V [J] of the airbag is obtained from an airbag internal pressure P [kPa] and an airbag volume V [L] when an obstacle collides.
(2) Calculation of speed W at which impact can be absorbed by airbag
A relative speed W [km/h] of an obstacle (weight M [kg]) at which impact can be absorbed by the airbag is expressed by the following equations according to the energy conservation law.

$$ P \times V = \frac{1}{2} M \left( \frac{W}{3.6} \right)^2 \qquad \therefore W = 5.1 \times \sqrt{\frac{PV}{M}} $$

(3) Calculation of numerical value X
A numerical value X [(kg)$^{1/2}$·km/h] is defined as the following equation.

$$ X = \sqrt{M} \cdot W = 5.1 \times \sqrt{PV} $$

FIG. 18 shows results of trial calculations in the range of the internal pressure P (10 to 50 kPa) and the bag volume (10 to 600 L) of an airbag that can be implemented in the present invention.

From FIG. 18, it was found that the airbag of the present invention had a numerical value X in the range of 50 to 900.

REFERENCE SIGNS LIST

1, 101, 101a, 205, 305 Airbag device for flying object
2, 102, 102a Expandable member
3, 30, 103, 206 Gas generator
4, 104 Current supply section
5, 105 Squib (igniter)
5a, 105aIgnition part
5b, 105b Terminal pin
6 Filter
7 Gas discharge member
7a Gas outlet
10, 110 Flying object
11a, 11b, 11c, 11d, 111b, 111d Propeller
12a, 12b, 12c, 12d, 112b, 112d Motor
13a, 13b, 13c, 13d, 113b, 113d Rotary shaft
14a, 14b, 14c, 14d, 114b, 114d Motor holding portion
15a, 15b, 15c, 15d, 115b, 115d Rotor guard
16, 116 Frame
17, 117 Upper center guard
18, 118 Lower center guard
19, 119 Upper cover member (housing)
20, 120 Lower cover member (housing)
20b, 20d, 120b, 120d Opening
21, 121 Central frame
22, 122 Internal space
23 Base
24, 124 Battery
25b, 25d, 125b, 125d, 203, 303 Leg
26b, 26d, 126b, 126d Frame connecting member
31 Connection chamber
32 Gas-filled container
33 Vulnerable wall
140 Plate member
141 Wall portion
201, 301 Airframe
202, 302 Propulsion mechanism
204, 304 Object to be protected mounted on flying object
211 Sensor
220 Controller
221 Sensor abnormality detection section
222 Calculation section
223 Notification section
240 Abnormality detection device

**Claims**

1. An airbag device for a flying object (1, 101, 101a, 205, 305), which protects at least one of a plurality of objects to be protected mounted on the flying object (10, 110) from collision with an obstacle, the airbag device (1, 101, 101a, 205, 305) comprising:

   an airbag which is configured to be provided adjacent to at least one of the objects to be protected mounted on the flying object (10, 110), is contracted or folded in an initial state, and is deployable so as to cover a portion or the entirety of a periphery of the object to be protected mounted on the flying object (10, 110) when the airbag is inflated; and
   a gas generator (3) which is connected to the airbag (1, 101, 101a, 205, 305) and is capable of supplying gas into the airbag to inflate the airbag when the gas generator (3) is activated;
   wherein the airbag and the gas generator (3) are configured such that an internal pressure of the airbag after the deployment is from -69.8kPa to 48.6kPa; and,
   wherein the airbag has two vent holes having a total opening area with respect to the area of the airbag in a range of 0.086% to 0.27%; and,
   wherein when a weight of the obstacle is M [kg] and a relative speed with respect to the obstacle at which the airbag (1, 101, 101a, 205, 305) is capable of absorbing impact is W [m/s], a numerical value $M^{1/2} \times W = x$ [kg$^{1/2}$ m/s] is 50 to 900.

2. The airbag device for a flying object (1, 101, 101a, 205, 305) according to claim 1, wherein the object to be protected mounted on the flying object (10, 110) is any one of a power source of the flying object (10, 110), a safety device used to protect the flying object (10, 110) and a collision object that collides with the flying object (10, 110) from the impact at the time of collision, a laser surveying device capable of performing surveying, an altitude sensor capable of detecting altitude, an infrared sensor or ultrasonic sensor capable of detecting a distance from the collision object, a camera capable of performing imaging, a black box device that records acquired data, and a flight control device that controls flight of the flying object (10, 110).

3. The airbag device for a flying object (1, 101, 101a, 205, 305) according to claim 1 or 2, wherein the airbag is a tubular expandable body which expands so as to cover a portion or the entirety of a periphery of the object to be protected mounted on the flying object (10, 110) when the gas generator (3) is operated.

4. The airbag device for a flying object (1, 101, 101a, 205, 305) according to claim 1 or 2, wherein the airbag is an expandable body having a dome-like portion which expands so as to cover a portion or the entirety of a periphery of the object to be protected mounted on the flying object (10, 110) when the gas generator (3) is operated.

5. The airbag device for a flying object according to any one of claims 1 to 4, wherein the two vent holes of the airbag are capable of discharging gas from inside the airbag.

6. The airbag device for a flying object (1, 101, 101a, 205, 305) according to claim 1, wherein one of the objects to be protected mounted on the flying object is a detection device capable of detecting or predicting collision between the flying object (10, 110) and an obstacle existing outside the flying object (10, 110), and after the detection device detects or predicts the collision between the flying object (10, 110) and the obstacle existing outside the flying object (10, 110) , the detection device transmits an operation signal to the gas generator (3) to operate the gas generator (3), and controls the airbag to start deployment within 5 ms to 36 s.

7. The airbag device for a flying object (1, 101, 101a, 205, 305) according to claim 6, wherein detectable distance from the detection device (240) to the obstacle existing outside the flying object (10, 110) is 0 m to 10 m.

8. The airbag device for a flying object (1, 101, 101a, 205, 305) according to any one of claims 1 to 7, wherein the gas generator (3) has a pyro-type gas generating agent and is configured such that the gas is generated by combustion of the pyro-type gas generating agent to flow into the airbag.

9. The airbag device for a flying object (1, 101, 101a, 205, 305) according to any one of claims 1 to 7 , wherein the gas generator (3) comprises a gas-filled container (32) filled with compressed gas and an igniter that has an ignition charge and cleaves the gas-filled container (32) owing to combustion of the ignition charge to make the compressed gas as the gas flow into the airbag.

10. The airbag device for a flying object (1, 101, 101a, 205, 305) according to any one of claims 1 to 9, wherein at least one of the objects to be protected mounted on the flying object (10, 110) is provided inside an airframe (201, 301) of the flying object (10, 110), and the airbag is provided inside the airframe (201, 301) of the flying object (10, 110) to be adjacent to the object to be protected mounted on the flying object provided inside the airframe (201, 301) of the flying object (10, 110).

**Patentansprüche**

1. Airbag-Vorrichtung für ein Flugobjekt (1, 101, 101a, 205, 305),

die mindestens einer einer Vielzahl zu schützender Gegenstände, die an dem Flugobjekt (10, 110) angebracht sind, vor der Kollision mit einem Hindernis schützt,
wobei die Airbag-Vorrichtung (1, 101, 101a, 205, 305) umfasst:

einen Airbag, der eingerichtet ist, benachbart zu mindestens einem der zu schützenden Gegenstände angebracht zu werden, die an dem Flugobjekt (10, 110) angebracht sind, der in einem ersten Zustand zusammengezogen oder gefaltet ist, und der so entfaltbar ist, dass er einen Teil oder die Gesamtheit einer Peripherie des zu schützenden Gegenstands abdeckt, der an dem Flugobjekt (10,110) angebracht ist, wenn der Airbag aufgeblasen ist, und einen Gasgenerator (3), der mit dem Airbag (1, 101, 101a, 205, 305) verbunden ist und der in der Lage ist, Gas in den Airbag zu leiten, um den Airbag aufzublasen, wenn der Gasgenerator (3) aktiviert ist,
wobei der Airbag und der Gasgenerator (3) dazu eingerichtet sind, dass ein innerer Druck des Airbags nach der Entfaltung zwischen -69,8kPa und 48,6kPa liegt;
wobei der Airbag zwei Entlüftungslöcher mit einer Gesamtöffnungsfläche in Bezug auf die Fläche des Airbags in einem Bereich von 0,086% bis 0,27% hat; und,
wobei, wenn ein Gewicht des Hindernisses M [kg] beträgt und eine Relativgeschwindigkeit gegenüber dem Hindernis W [m/s] beträgt, bei der der Airbag (1, 101, 101a, 205, 305) in der Lage ist, einen Aufprall zu absorbieren, ein numerischer Wert $M^{1/2} \times W = X$ [$kg^{1/2}$ m/s] zwischen 50 und 900 liegt.

2. Airbag-Vorrichtung für ein Flugobjekt (1, 101, 101a, 205, 305) gemäß Anspruch 1, wobei das zu schützende Objekt, das an dem Flugobjekt (10, 110) angebracht ist, eines der Folgenden ist:

eine Energiequelle des Flugobjekts (10, 110), eine Sicherheitseinrichtung, um das Flugobjekt (10, 110) und ein Kollisionsobjekt, das mit dem Flugobjekt (10, 110) kollidiert, vor dem Aufprall zum Zeitpunkt des Zusammenstoßes zu schützen,
ein Laservermessungsgerät, das in der Lage ist eine Vermessung durchzuführen,
ein Höhensensor, der in der Lage ist, die Höhe zu messen,
ein Infrarotsensor oder Ultraschallsensor, der in der Lage ist, den Abstand zum Kollisionsobjekt zu ermitteln,
eine Kamera, die eine Bildgebung durchführen kann,
eine Black-Box-Vorrichtung, die erfasste Daten aufzeichnet, und
eine Flugsteuerung, die den Flug des Flugobjekts (10, 110) steuert.

3.  Airbag-Vorrichtung für ein Flugobjekt (1, 101, 101a, 205, 305) gemäß Anspruch 1 oder 2, wobei der Airbag ein röhrenförmiger, ausdehnbarer Körper ist, der sich so ausdehnt, dass er einen Teil oder die Gesamtheit einer Peripherie des zu schützenden Objekts abdeckt, das an dem Flugobjekt (10, 110) angebracht ist, wenn der Gasgenerator (3) betrieben wird.

4.  Airbag-Vorrichtung für ein Flugobjekt (1, 101, 101a, 205, 305) gemäß Anspruch 1 oder 2, wobei der Airbag ein ausdehnbarer Körper mit einem kuppelartigen Anteil ist, der sich so ausdehnt, dass er einen Teil oder die Gesamtheit der Peripherie des zu schützenden Objekts abdeckt, das an dem Flugobjekt (10, 110) angebracht ist, wenn der Gasgenerator (3) betrieben wird.

5.  Airbag-Vorrichtung für ein Flugobjekt gemäß einem der Ansprüche 1 bis 4, wobei die beiden Entlüftungslöcher des Airbags in der Lage sind, Gas aus dem Inneren des Airbags abzulassen.

6.  Airbag-Vorrichtung für ein Flugobjekt (1, 101, 101a, 205, 305) gemäß Anspruch 1, wobei eines der zu schützenden Objekte, die an dem Flugobjekt angebracht sind, eine Erkennungsvorrichtung ist, die in der Lage ist, eine Kollision zwischen dem Flugobjekt (10, 110) und einem außerhalb des Flugobjekts (10, 110) vorhandenen Hindernis zu erkennen oder vorherzusagen und die, nachdem die Erkennungsvorrichtung den Zusammenstoß zwischen dem zu Flugobjekt (10, 110) und außerhalb des Flugobjekts (10, 110) vorhandenen Hindernis erkennt oder vorhersagt, ein Betriebssignal an den Gasgenerator (3) sendet, um den Gasgenerator (3) zu betreiben, und steuert den Airbag, um die Entfaltung innerhalb von 5 ms bis 36 s auszulösen.

7.  Airbag-Vorrichtung für ein Flugobjekt (1, 101, 101a, 205, 305) gemäß Anspruch 6, wobei ein detektierbarer Abstand von der Erkennungsvorrichtung (240) zu dem außerhalb des Flugobjekts (10, 110) vorhandenen Hindernis 0 m bis 10 m beträgt.

8.  Airbag-Vorrichtung für ein Flugobjekt (1, 101, 101a, 205, 305) gemäß einem der Ansprüche 1 bis 7, wobei der Gasgenerator (3) ein pyrotechnisches Gaserzeugungsmittel aufweist und dazu eingerichtet ist, dass das Gas durch Verbrennung des pyrotechnischen Gaserzeugungsmittels erzeugt wird, um in den Airbag hineinzuströmen.

9.  Airbag-Vorrichtung für ein Flugobjekt (1, 101, 101a, 205, 305) gemäß einem der Ansprüche 1 bis 7, wobei der Gasgenerator (3) einen mit Gas gefüllten Behälter (32), der mit komprimiertem Gas gefüllt ist, und einen Anzünder aufweist, der eine Zündladung enthält und den gasgefüllten Behälter (32) durch die Verbrennung der Zündladung durchtrennt, um das komprimierte Gas in den Airbag strömen zu lassen.

10. Airbag-Vorrichtung für ein Flugobjekt (1, 101, 101a, 205, 305) gemäß einem der Ansprüche 1 bis 9, wobei mindestens einer der zu schützenden Gegenstände, die an dem Flugobjekt (10, 110) angebracht sind, sich innerhalb eines Flugobjektrahmens (201, 301) des Flugobjekts (10, 110), und der Airbag innerhalb des Flugobjektrahmens (201, 301) des Flugobjekts (10, 110) angeordnet ist, um benachbart zu dem zu schützenden Objekt zu sein, das innerhalb des Flugobjektrahmens (201, 301) des Flugobjekts (10, 110) an dem Flugobjekt angebracht ist.

**Revendications**

1.  Dispositif de coussin de sécurité gonflable pour un objet volant (1, 101, 101a, 205, 305), qui protège au moins un objet d'une pluralité d'objets à protéger, montés sur l'objet volant (10, 110), contre une collision avec un obstacle, le dispositif de coussin de sécurité gonflable (1, 101, 101a, 205, 305) comprenant :

    un coussin de sécurité gonflable qui est configuré pour être prévu en position adjacente à au moins l'un des objets à protéger, montés sur l'objet volant (10, 110), est contracté ou plié dans un état initial, et est déployable de sorte à couvrir une portion ou l'intégralité d'une périphérie de l'objet à protéger, monté sur l'objet volant (10, 110), lorsque le coussin de sécurité gonflable est gonflé ; et
    un générateur de gaz (3) qui est raccordé au coussin de sécurité gonflable (1, 101, 101a, 205, 305) et est apte à amener du gaz dans le coussin de sécurité gonflable afin de gonfler le coussin de sécurité gonflable lorsque le générateur de gaz (3) est activé ;
    dans lequel le coussin de sécurité gonflable et le générateur de gaz (3) sont configurés de telle sorte qu'une pression interne du coussin de sécurité gonflable après son déploiement est de -69,8 kPa à 48,6 kPa ; et,
    dans lequel le coussin de sécurité gonflable possède deux trous d'évent ayant une superficie d'ouverture totale par rapport à la superficie du coussin de sécurité gonflable dans une plage de 0,086 % à 0,27 % ; et,

dans lequel, lorsqu'un poids de l'obstacle est M [kg] et qu'une vitesse relative par rapport à l'obstacle à laquelle le coussin de sécurité gonflable (1, 101, 101a, 205, 305) est apte à absorber un impact est de W [m/s], une valeur numérique $M^{1/2} \times W = X$ [kg$^{1/2}$ m/s]) est de 50 à 900.

2. Dispositif de coussin de sécurité gonflable pour un objet volant (1, 101, 101a, 205, 305) selon la revendication 1, dans lequel l'objet à protéger, monté sur l'objet volant (10, 110), est l'un quelconque parmi une source d'alimentation de l'objet volant (10, 110), un dispositif de sécurité utilisé pour protéger l'objet volant (10, 110) et un objet de collision qui se heurte à l'objet volant (10, 110) de l'impact au moment de la collision, un dispositif laser de mesure apte à effectuer des mesures, un capteur d'altitude apte à détecter l'altitude, un capteur à infrarouges ou un capteur à ultrasons apte à détecter une distance à partir de l'objet de collision, une caméra apte à effectuer une imagerie, un dispositif de boîte noire qui enregistre les données acquises, et un dispositif de commande de vol qui commande le vol de l'objet volant (10, 110).

3. Dispositif de coussin de sécurité gonflable pour un objet volant (1, 101, 101a, 205, 305) selon la revendication 1 ou 2, dans lequel le coussin de sécurité gonflable est un corps expansible tubulaire qui se déploie de sorte à couvrir une portion ou l'intégralité d'une périphérie de l'objet à protéger, monté sur l'objet volant (10, 110), lorsque le générateur de gaz (3) est actionné.

4. Dispositif de coussin de sécurité gonflable pour un objet volant (1, 101, 101a, 205, 305) selon la revendication 1 ou 2, dans lequel le coussin de sécurité gonflable est un corps expansible ayant une portion semblable à un dôme qui se déploie de sorte à couvrir une portion ou l'intégralité d'une périphérie de l'objet à protéger, monté sur l'objet volant (10, 110), lorsque le générateur de gaz (3) est actionné.

5. Dispositif de coussin de sécurité gonflable pour un objet volant selon l'une quelconque des revendications 1 à 4, dans lequel les deux trous d'évent du coussin de sécurité gonflable sont aptes à évacuer du gaz à partir de l'intérieur du coussin de sécurité gonflable.

6. Dispositif de coussin de sécurité gonflable pour un objet volant (1, 101, 101a, 205, 305) selon la revendication 1, dans lequel l'un des objets à protéger, montés sur l'objet volant, est un dispositif de détection apte à détecter ou à prédire une collision entre l'objet volant (10, 110) et un obstacle existant à l'extérieur de l'objet volant (10, 110), et une fois que le dispositif de détection a détecté ou prédit la collision entre l'objet volant (10, 110) et l'obstacle existant à l'extérieur de l'objet volant (10, 110), le dispositif de détection transmet alors un signal de fonctionnement au générateur de gaz (3) pour actionner le générateur de gaz (3), et ordonner au coussin de sécurité gonflable de commencer son déploiement en allant de 5 ms à 36 s.

7. Dispositif de coussin de sécurité gonflable pour un objet volant (1, 101, 101a, 205, 305) selon la revendication 6, dans lequel la distance détectable depuis le dispositif de détection (240) jusqu'à l'obstacle existant à l'extérieur de l'objet volant (10, 110) est de 0 m à 10 m.

8. Dispositif de coussin de sécurité gonflable pour un objet volant (1, 101, 101a, 205, 305) selon l'une quelconque des revendications 1 à 7, dans lequel le générateur de gaz (3) a un agent de génération de gaz de type pyrogène et est configuré de telle sorte que le gaz est généré par la combustion de l'agent de génération de gaz de type pyrogène pour le faire s'écouler dans le coussin de sécurité gonflable.

9. Dispositif de coussin de sécurité gonflable pour un objet volant (1, 101, 101a, 205, 305) selon l'une quelconque des revendications 1 à 7, dans lequel le générateur de gaz (3) comprend un contenant rempli de gaz (32) rempli avec du gaz comprimé et un allumeur qui a une charge d'allumage et fend le contenant rempli de gaz (32) en raison de la combustion de la charge d'allumage pour faire en sorte que le gaz comprimé soit le gaz qui s'écoule dans le coussin de sécurité gonflable.

10. Dispositif de coussin de sécurité gonflable pour un objet volant (1, 101, 101a, 205, 305) selon l'une quelconque des revendications 1 à 9, dans lequel au moins l'un des objets à protéger, montés sur l'objet volant (10, 110), est prévu à l'intérieur d'une cellule (201, 301) de l'objet volant (10, 110), et le coussin de sécurité gonflable est prévu à l'intérieur de la cellule (201, 301) de l'objet volant (10, 110) pour être en position adjacente à l'objet à protéger, monté sur l'objet volant, prévu à l'intérieur de la cellule (201, 301) de l'objet volant (10, 110).

Fig 1

11c
13c
12c
14c
15c

17

12d
13d
14d
15d
11d

10

Fig 2

11b
12b
13b
14b
15b

16

15a
14a
12a
13a
11a

A

A

EP 3 560 836 B1

14

Fig 3

(a)

(b)

EP 3 560 836 B1

Fig 4

31  33  30
32

CURRENT SUPPLY SECTION

104

105b 105a

105

Fig 5

(a)

(b)

Fig 6

(a) <u>210</u>

202    201    202

204    205

203    203

(b) <u>210</u>

202    201    202

204    205

203    203

Fig 8

(a) <u>310</u>

301

302    302

304   305

303    303

(b) <u>310</u>

301

302    302

304   305

303    303

Fig 9

Fig 10

Before operation

After Operation

Airbag

Inflator

Pressure Sensor

Fig 11

| NAME | AIRBAG VOLUME | AIRBAG SURFACE AREA | NUMBER OF VENT HOLES | VENT HOLE OPENING AREA | MATERIAL |
|---|---|---|---|---|---|
| Vent0 | 45 | 7280 | 0 | — | POLYAMIDE |
| Vent1 | 45 | 7280 | 1 | 3.142 | POLYAMIDE |
| Vent2 | 45 | 7280 | 2 | 6.283 | POLYAMIDE |

Fig 12

Fig 13

Fig 14

| Impact Time [ms] | Bag Internal Pressure [kPa] | MAXIMUM RESULTANT ACCELERATION [m/s$^2$] | MAXIMUM RESULTANT ACCELERATION [G] |
|---|---|---|---|
| 23.6 | -15.5 | 519.6 | 53.0 |
| 34.9 | -2.83 | 506.1 | 51.6 |
| 38.4 | -2.34 | 434.7 | 44.4 |
| 40.2 | -2.26 | 416 | 42.4 |
| 44.4 | 1.68 | 383.7 | 39.2 |
| 50.4 | 7.78 | 393.7 | 40.2 |
| 62.5 | 8.22 | 298.9 | 30.5 |
| 71.9 | 8.71 | 334.6 | 34.1 |
| 97.5 | 4.81 | 339.7 | 34.7 |

Fig 15

MAXIMUM RESULTANT ACCELERATION [ms2]

$y = -8.449x + 410.76$

-69.8

48.6

BAG INTERNAL PRESSURE [kPa]

Fig 16

| NAME | AIRBAG SURFACE AREA [cm2] | VENT HOLE OPENING AREA [cm2] | VENT HOLE AREA PERCENTAGE [%] | IMPACT TIME [ms] | BAG INTERNAL PRESSURE [kPa] | MAXIMUM RESULTANT ACCELERATION [m/s$^2$] | MAXIMUM RESULTANT ACCELERATION [G] |
|---|---|---|---|---|---|---|---|
| Vent0 | 7280 | – | 0 | 57.2 | 5.61 | 440.8 | 45.0 |
| Vent1 | 7280 | 3.142 | 0.043 | 56.8 | 4.51 | 383.7 | 39.2 |
| Vent2 | 7280 | 6.283 | 0.086 | 62.5 | 8.22 | 298.9 | 30.5 |

23

Fig 17

MAXIMUM
RESULTANT
ACCELERATION
[m/s2]

VENT HOLE AREA PERCENTAGE (VENT OPENING AREA/BAG SURFACE AREA) [%]

Fig 18

RELATIVE
SPEED WITH
RESPECT TO
OBSTACLE
AT WHICH
IMPACT CAN BE
ABSORBED BY
AIRBAG
[km/h]

Weight of Obstacle [kg]

**REFERENCES CITED IN THE DESCRIPTION**

**Patent documents cited in the description**

- JP 2016088111 A
- US 20160332739 A1